# EUROPEAN PATENT SPECIFICATION

(11) **EP 4 439 787 B1**
(45) Date of publication and mention of the grant of the patent: **09.09.2026**
(21) Application number: 24166211.3
(22) Date of filing: 26.03.2024
(51) Int. Cl.: H01M 10/48, H01M 50/213, H01M 50/24, H01M 50/262, G01K 1/14

(54) **BATTERY PACK**
BATTERIEPACK
BLOC-BATTERIE

(30) Priority: 26.03.2023 KR 20230039372
(43) Date of publication of application: 02.10.2024
(73) Proprietor: Samsung SDI Co., Ltd., Yongin-si, Gyeonggi-do 17084 (KR)
(72) Inventor: Chae, Heedong, Yongin-si, Gyeonggi-do 17084 (KR); Park, Sangsu, Yongin-si, Gyeonggi-do 17084 (KR); Park, Kyunghoon, Yongin-si, Gyeonggi-do 17084 (KR); Seo, Heechul, Yongin-si, Gyeonggi-do 17084 (KR)
(74) Representative: Gulde & Partner

(56) References cited:
- EP-A2- 4 071 874
- EP-B1- 2 306 582
- EP-B1- 2 765 401
- DE-A1- 102005 002 383
- US-B2- 10 714 796

## Description

### BACKGROUND

### 1. Field

Aspects of embodiments of the present disclosure relate to a battery pack.

### 2. Description of the Related Art

Generally, a secondary battery is designed to be charged and discharged, unlike a primary battery that is not designed to be charged. Secondary batteries are used as energy sources for mobile devices, electric vehicles, hybrid vehicles, electric bicycles, uninterruptible power supplies, etc. Depending on the type of external device using a secondary battery, the secondary batteries may be used in the form of a single battery or in the form of a module in which multiple batteries are connected and bundled together into a single unit.

Small mobile devices, such as mobile phones, may operate for a certain amount of time with the output and capacity of a single battery. However, in cases where long-term and high-power driving are desired, such as electric vehicles and hybrid vehicles that consume a lot of power, a module including a plurality of batteries is preferred due to the output and capacity characteristics. The output voltage or output current may be increased by increasing the number of batteries included in the module. Examples for a secondary battery comrising a temperature measuring sensor may be found in EP 4071874 A2.

### SUMMARY

According to embodiments of the present disclosure, a battery pack includes a sealing member provided around a periphery of a mounting hole in a housing in which a temperature measuring sensor for detecting a temperature of a battery cell is mounted, thereby blocking the inflow of foreign substances through the mounting hole.

According to embodiments of the present disclosure, a battery pack includes a temperature measuring sensor for detecting the temperature of battery cells. The temperature measuring sensor enters an accommodation space inside the housing where the plurality of battery cells are accommodated from the outside of the housing. Due to a positional alignment between the temperature measuring sensor, the adjacent housing, and sealing member, the sealing member is positioned along the periphery of the mounting hole in the housing by at least a part of the temperature measuring sensor that enters the housing, and thus, the sealing characteristics may be improved.

Additional aspects and features of the present disclosure will be set forth, in part, in the description which follows and, in part, will be apparent from the description or may be learned by practice of the presented embodiments of the present disclosure.

According to an embodiment of the present disclosure, a battery pack includes: a plurality of battery cells; a housing accommodating the plurality of battery cells; a temperature measuring sensor extending from outside the housing to inside the housing along an axial direction by passing through a mounting hole in the housing, the temperature measuring sensor including: a pillar part extending along the axial direction; a locking jaw member extending from a lower position of the pillar part to an upper position toward the housing along the axial direction, extending to follow both the axial direction and a crossing direction crossing the axial direction, and providing an elastic bias force along the crossing direction away from the pillar part with respect to the mounting hole in the housing; and an expansion part expanding from a circumference of the pillar part to cover the mounting hole at an upper portion of the mounting hole along the axial direction; and a sealing member between the expansion part of the temperature measuring sensor and the housing and surrounding the mounting hole.

The locking jaw member may include: a fixing part fixed to the lower position of the pillar part; an elastic part extending upwardly from the fixing part to follow both the axial direction and the crossing direction; a hooking part having a stepped surface extending upwardly from the elastic part and supporting a corner of the housing around the mounting hole; and a mounting part extending upwardly from the hooking part and inserted into and fixed to a periphery of the mounting hole.

The stepped surface may be formed by a thickness difference between the hooking part and the mounting part at one end of the hooking part.

The stepped surface and the mounting part, which may extend from an inner position adjacent to the pillar part on the stepped surface, may together surround the corner of the housing around the mounting hole.

The elastic part may have a thickness less than a thickness of each of the fixing part and the hooking part.

The fixing part and hooking part connected to both ends of the elastic part may have a rounded joint forming an elastic connection.

The elastic part and the hooking part may each have an oblique contour that follows both the axial direction and the crossing direction.

The elastic part and the hooking part may each have an oblique contour extending with substantially same slope.

The mounting part may provide an elastic bias force tending to expand the mounting part toward the periphery of the mounting hole, and the mounting part may extend along a direction relatively closer to the axial direction than an extension direction of the elastic part and the hooking part.

The expansion part may have a disk shape extending from the circumference of the pillar part.

The sealing member may be between an outer surface of the housing and the expansion part on the outer surface of the housing opposite to the plurality of battery cells.

The sealing member may include a concentric inner wall and an outer wall surrounding the mounting hole at different inner and outer positions to provide double sealing of the mounting hole.

The sealing member may have an annular separation groove separating the inner wall and the outer wall from each other in at least one of an upper surface of the sealing member facing the expansion part and a lower surface of the sealing member facing the housing.

The locking jaw member includes a mounting part in close contact with a periphery of the mounting hole and an inner wall of the sealing member while providing an outwardly elastic bias force with respect to the periphery of the mounting hole and the inner wall of the sealing member.

The mounting part includes: a lower portion fitted into the mounting hole and forcibly contacting the mounting hole; and an upper portion forcibly contacting the inner wall of the sealing member.

The mounting part aligns the temperature measuring sensor and the sealing member with respect to the mounting hole in the housing.

The temperature measuring sensor and the sealing member are aligned with respect to the mounting hole due to the elastic bias force of the mounting part.

The locking jaw member may include a pair of locking jaw members on opposite sides of the pillar part. The pair of locking jaw members may provide an outwardly elastic bias force toward a periphery of the mounting hole, and the temperature measuring sensor may be configured to be attached to or detached from the mounting hole by providing a pressing force to the pair of locking jaw members toward the pillar part or releasing the pressing force.

A contact surface between the locking jaw member and the mounting hole and the sealing member may be a non-adhesive surface.

The pillar part may include a lower end extending toward one of the battery cells. The lower end of the pillar part and the one of the battery cells may contact each other through a thermal interference material, and the thermal interference material may provide forced contact with the one of the battery cells while being adhered to the lower end of the pillar part.

The one of the battery cells may have first and second end surfaces on which first and second electrodes are respectively formed and a cylindrical side extending between the first and second end surfaces, and the lower end of the pillar part may have a concave curved surface matching the cylindrical side of the one of the battery cells.

### BRIEF DESCRIPTION OF THE DRAWINGS

The above and other aspects and features of the present disclosure will be more apparent from the following description taken in conjunction with the accompanying drawings, in which:
FIG. 1 is an exploded perspective view of a battery pack according to embodiments of the present disclosure;
FIG. 2 is an exploded perspective view of a temperature measuring sensor and a sealing member shown in FIG. 1; and
FIGS. 3 and 4 are cross-sectional views taken along the line III-III' of FIG. 2 illustrating the assembly of the temperature measuring sensor and the sealing member shown in FIG. 2.

### DETAILED DESCRIPTION

Reference will now be made, in detail, to embodiments, examples of which are illustrated in the accompanying drawings. In this regard, the described embodiments may have different forms and should not be construed as being limited to the descriptions set forth herein. Accordingly, embodiments are merely described below, by referring to the figures, to explain aspects and features of the present description.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Hereinafter, a battery pack according to embodiments of the present disclosure will be described with reference to the accompanying drawings.

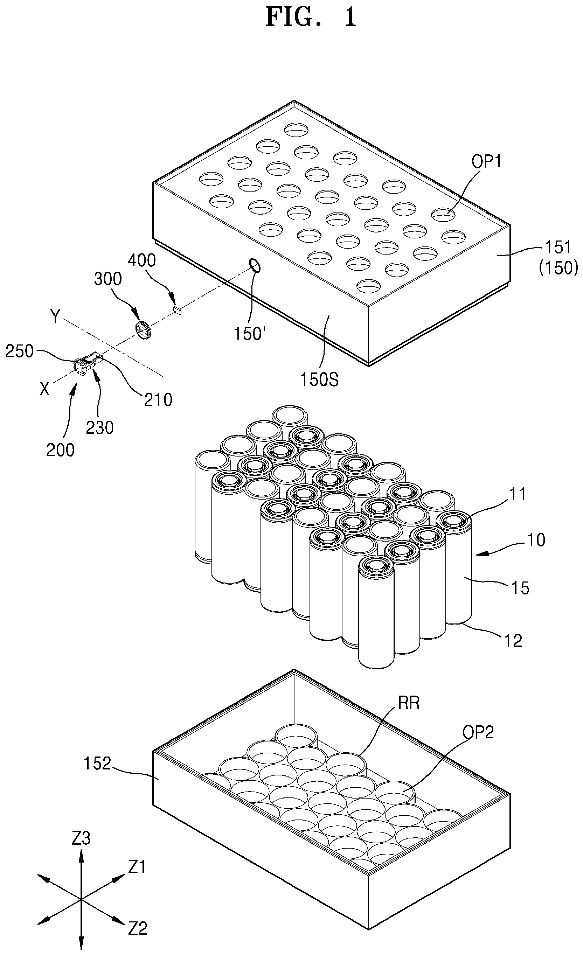

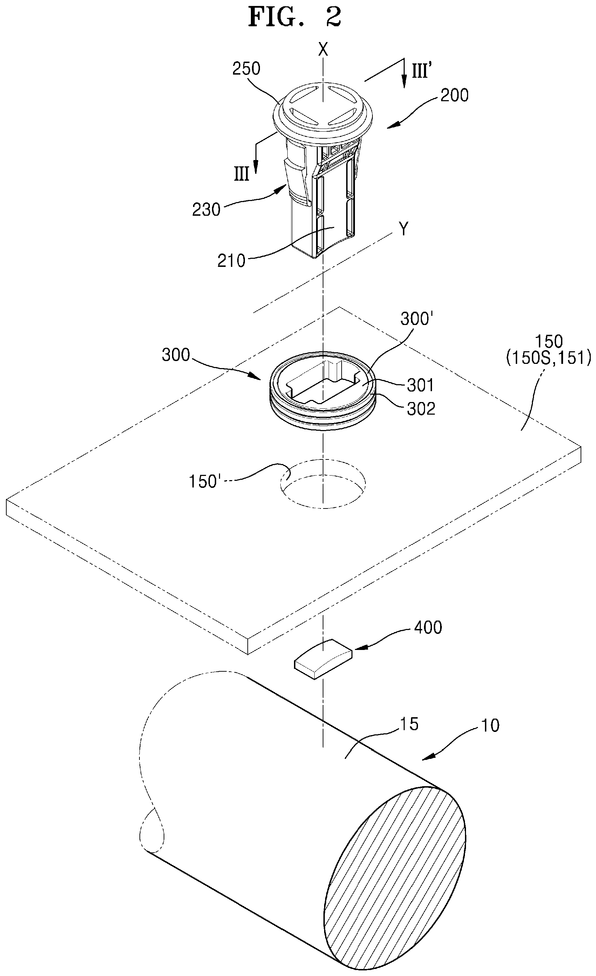

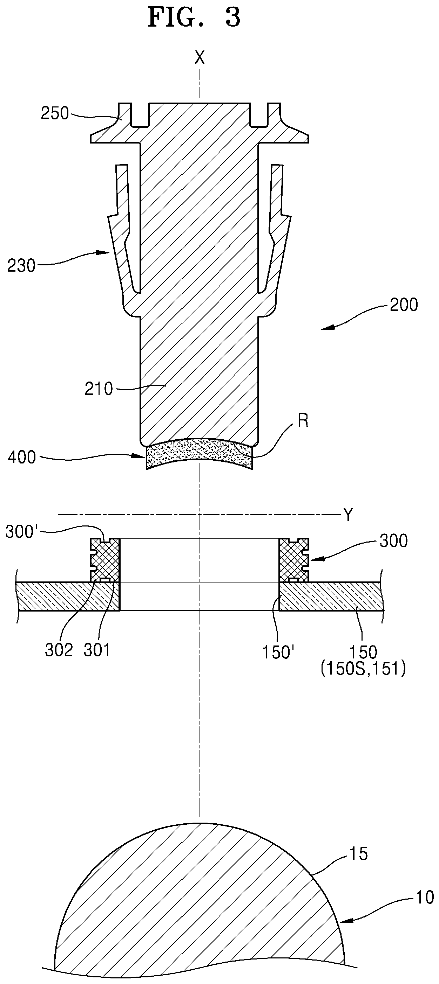

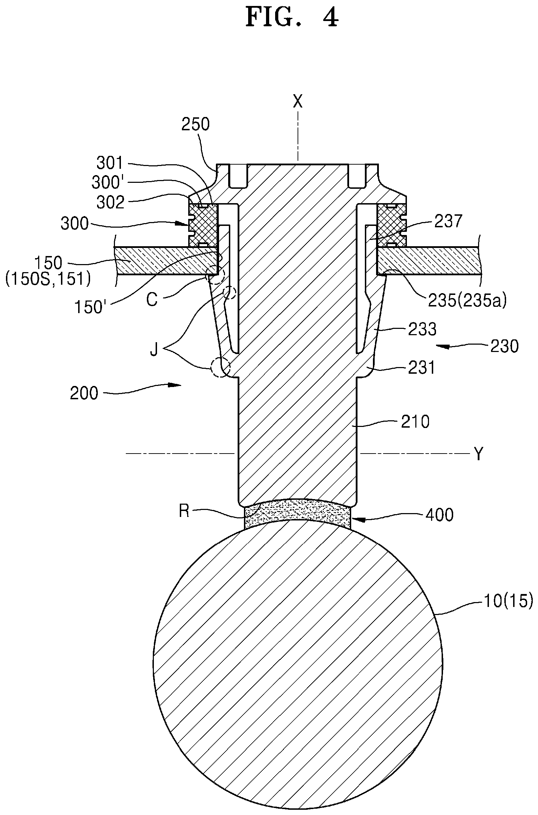

FIG. 1 is an exploded perspective view of a battery pack according to embodiments of present disclosure. FIG. 2 is an exploded perspective view illustrating the assembly of a temperature measuring sensor 200 and a sealing member 300 shown in FIG. 1 and shows each component along an axial direction X of the temperature measuring sensor 200. FIGS. 3 and 4 are different cross-sectional views taken along the line III-III' of FIG. 2 illustrating the assembly of the temperature measuring sensor 200 and the sealing member 300 shown in FIG. 2.

Referring to FIGS. 1 to 4, the battery pack, according to embodiments of the present disclosure, may include a plurality of battery cells 10, a housing 150 accommodating the battery cells 10, a temperature measuring sensor 200, and a sealing member 300. The temperature measuring sensor 200 may include a pillar part 210 protruding toward the plurality of battery cells 10 and mounted through a mounting hole (e.g., a mounting opening) 150' in the housing 150 to measure a temperature of the plurality of battery cells 10, an expansion part 250 extending from a circumference of the pillar part 210 and covering the mounting hole 150', and a locking jaw member 230 extending from the pillar part 210 toward the housing 150 and fixed in the mounting hole 150' in the housing 150. The sealing member 300 is disposed between the expansion part 250 and the housing 150 and surrounds (e.g., extends around a circumference of) the mounting hole 150'.

The housing 150 may include a first housing 151 and a second housing 152 assembled to face each other with the plurality of battery cells 10 disposed therebetween. Through-holes OP1 and OP2 respectively formed in the first housing 151 and the second housing 152 expose first and second ends 11 and 12 opposite to each other of the plurality of battery cells 10, and an assembly rib RR surrounds (e.g., surrounds at least a part of) a side 15 of the plurality of battery cells 10 to regulate (or maintain) assembly positions of the plurality of battery cells 10.

In embodiments of the present disclosure, the plurality of the battery cells 10 may be arranged in a plurality of rows along a second direction Z2 crossing the first direction Z1, and each row may include a plurality of the battery cells 10 arranged along the first direction Z1. The first and second housings 151 and 152 may be assembled (e.g., may be arranged and assembled together) to face each other with the plurality of battery cells 10 disposed therebetween along a third direction Z3 crossing the first and second directions Z1 and Z2.

In embodiments of the present disclosure, each of the plurality of battery cells 10 has first and second ends 11 and 12 opposite to each other and a side 15 connecting (or extending between) the first and second ends 11 and 12 opposite to each other. The plurality of battery cells 10 may be provided as cylindrical battery cells having a side 15 in the form of an outer circumferential surface. In embodiments of the present disclosure, first and second electrode terminals having opposite polarities may be formed on the first and second ends 11 and 12 of the battery cell 10 and may be exposed to the outside of the housing 150 through through-holes (e.g., openings) OP1 and OP2 of the first and second housings 151 and 152, respectively. In embodiments of the present disclosure, the battery cells 10 arranged adjacent to each other may be arranged so that sides 15 face each other. In other embodiments of present disclosure, the plurality of battery cells 10 may be provided as hexagonal prismatic battery cells having a terminal surface on which electrode terminals are formed, a bottom surface disposed to face (e.g., opposite to) the terminal surface, and a side connecting (or extending between) the terminal surface and the bottom surface.

In embodiments of the present disclosure, the housing 150 may include first and second housings 151 and 152 assembled to face each other and to form an accommodation space in which the plurality of battery cells 10 are accommodated. In embodiments of the present disclosure, the temperature measuring sensor 200 for sensing the temperature of the battery cell 10 may be disposed on one side of the housing 150 surrounding the accommodation space in which the plurality of battery cells 10 are accommodated. In embodiments of the present disclosure, the temperature measuring sensor 200 may be selectively formed in (or selectively attached to) one of the first and second housings 151 and 152 along the third direction Z3 or may be disposed in both the first and second housings 151 and 152, respectively. In embodiments of the present disclosure, the temperature measuring sensor 200 may be disposed on the side 150S of the housing 150 facing the side 15 of the battery cell 10, and for example, may be selectively disposed in the first housing 151 from among the first and second housings 151 and 152. In other embodiments of present disclosure, the temperature measuring sensor 200 may be disposed on one side of the housing 150 facing any position (or portion) of the battery cell 10 and may be selectively disposed in the second housing 152 or disposed in both the first and second housings 151 and 152, respectively. The temperature measuring sensor 200 may be disposed on one side of the housing 150 surrounding the accommodation space, and to the extent that the temperature of the battery cell 10 in the accommodation space may be detected, may be not limited to the bar shape illustrated in the drawings and may be disposed in various places of the housing 150.

In embodiments of the present disclosure, the battery pack may include a temperature measuring sensor 200 for sensing temperatures of the plurality of battery cells 10 accommodated in the housing 150. Throughout this specification, that the temperature measuring sensor 200 detects (or is configured to detect) the temperature of the battery cell 10 or a plurality of battery cells 10 may refer to the temperature measuring sensor 200 detecting the temperature of any one of the battery cells 10 or of ones of the battery cells 10 or detecting the temperature of one unspecified battery cell 10 or the unspecified battery cells 10. For example, the temperature measuring sensor 200 may directly measure the temperature of the battery cell 10 or may measure the temperature in an accommodation space in which a plurality of battery cells 10 are accommodated and may estimate the temperature of the battery cells 10 from the temperature distribution in the accommodating space.

The temperature measuring sensor 200 may enter toward the accommodation space inside the housing 150 through a mounting hole 150' formed in one side of the housing 150, and when the temperature measuring sensor 200 is inserted into the mounting hole 150' and fixed thereto, the temperature measuring sensor 200 may be disposed throughout the inside and outside of (e.g., may extend from the outside to the inside of) the housing 150. For example, in embodiments of the present disclosure, the temperature measuring sensor 200 may be elongated along the axial direction X to enter the inside of the housing 150 from the outside of the housing 150. The temperature measuring sensor 200 may include a pillar part 210 extending throughout the inside and outside of the housing 150 along the axial direction X, an expansion part 250 extending along the circumference of the pillar part 210 from the outside of the housing 150, and a locking jaw member 230 extending from the circumference of the pillar part 210 inside the housing 150. Throughout this specification, the axial direction X may refer to the longitudinal direction of the temperature measuring sensor 200 and may refer to a direction from the outside of the housing 150 to the accommodation space inside the housing 150 along the length direction of the temperature measuring sensor 200 and to approach the battery cells 10 accommodated in the accommodation space. For example, in embodiments of the present disclosure, the axial direction X of the temperature measuring sensor 200 may refer to a direction facing the side 15 of the battery cells 10 corresponding to a temperature measuring point.

In embodiments of the present disclosure, the temperature measuring sensor 200 may include a pillar part 210 extending along the axial direction X. The pillar part 210 may be formed along the axial direction X to enter the inside of the housing 150 from the outside of the housing 150 and access the accommodation space inside the housing 150, and the pillar part 210 may form the skeleton of (e.g., the structure of) the temperature measuring sensor 200. While extending along the axial direction X, the pillar part 210 may support the expansion part 250 and the locking jaw member 230 at different locations along the axial direction X. As explained earlier, the axial direction X may refer to a direction in which the pillar part 210 extends, and based on one side (e.g., side 150S of the housing 150) of the housing 150 to which the temperature measuring sensor 200 is mounted and based on one side of the housing 150 that crosses between the inside where the accommodation space is formed and the outside where a part of the temperature measuring sensor 200 is exposed, may correspond to a direction perpendicular to the direction dividing the inside and outside of the housing 150.

Hereinafter, a temperature measuring sensor 200 according to embodiments of the present disclosure will be described in more detail with reference to FIGS. 2 to 4. Hereinafter, for convenience of understanding, as shown in FIGS. 2 to 4, the temperature measuring sensor 200 will be described with the axial direction X of the temperature measuring sensor 200 being the vertical direction.

In embodiments of the present disclosure, the locking jaw member 230 may be supported at a lower position of the pillar part 210 along the pillar part 210, and the locking jaw member 230 may include a pair of locking jaw members 230 supported at opposite positions along the circumference of the pillar part 210. In embodiments of the present disclosure, the pair of locking jaw members 230 may provide position fixation with the mounting hole 150' after being inserted into the mounting hole 150' in the housing 150 in an elastically compressed state along the mutually facing direction of the pair of locking jaw members 230 (e.g., the crossing direction Y crossing the axial direction X). For example, the pair of locking jaw members 230 may be fitted into the mounting hole 150' in an elastically compressed state, and along the crossing direction Y away from each other according to the elastic restoring force, may be fixed in position in the mounting hole 150' by being in close contact with the periphery of the mounting hole 150' in an elastically biased state. By fixing the position of the locking jaw member 230 with respect to the mounting hole 150', the position of the entire temperature measuring sensor 200 including the locking jaw member 230 may be fixed.

The locking jaw member 230 may extend from a lower position (or portion) of the pillar part 210 to an upper position toward the housing 150 along the axial direction X, and to provide an elastic bias in the crossing direction Y away from the pillar part 210, may extend away from the pillar part 210 along the crossing direction (e.g., the circumferential direction of the pillar part 210). For example, the locking jaw member 230 may extend from a lower position of the pillar part 210 to an upper position toward the housing 150 as a whole along an approximate oblique direction that follows both the axial direction X and the crossing direction Y. Throughout this specification, while the pillar part 210 may extend toward the housing 150 along the circumferential direction (e.g., the crossing direction Y) from the centrifugal axis (or axial axis) of the shaft, the pair of locking jaw members 230 are face away from each other and may be fitted in an elastically biased state within the mounting hole 150' in the housing 150. For example, in the description of the technical details of the pillar part 210, a circumferential direction from the center of the shaft may correspond to a crossing direction Y crossing the axial direction X.

In embodiments of the present disclosure, the locking jaw member 230 may be elastically biased in a direction away from the pillar part 210 along the crossing direction Y. For example, the locking jaw member 230 may be inserted into the mounting hole 150' in a compressed state toward the pillar part 210 along the crossing direction Y, and according to the elastic bias, which tends to expand the locking jaw member 230 in the crossing direction Y toward the periphery of the mounting hole 150', the locking jaw member 230 is fixed in position with respect to the mounting hole 150' by closely contacting the periphery of the mounting hole 150'. In embodiments of the present disclosure, the locking jaw member 230 may include a fixing part 231 extending along the crossing direction Y from the circumference of the pillar part 210, a mounting part 237 in close contact with the periphery of the mounting hole 150', an elastic part 233 connecting (or extending between) the fixing part 231 and the mounting part 237, and a hooking part (or hook part) 235 formed between the elastic part 233 and the mounting part 237.

The fixing part 231 may fix the temperature measuring sensor 200 supported through the locking jaw member 230 or the locking jaw member 230 to the pillar part 210 and may be formed with a thicker thickness than other members of the locking jaw member 230 to form a firm coupling with the pillar part 210. For example, the fixing part 231 may be formed with a relatively thick thickness and a rounded joint J with the elastic part 233 may be included to flexibly accommodate the elastic deformation of the elastic part 233 because the load of the temperature measuring sensor 200 may be transmitted to the fixing part 231. For example, the round joint J may flexibly accommodate the elastic deformation of the elastic part 233, and for example, a rounded joint J may be included so that internal stress is not concentrated while being flexibly deformed by the deformation of the elastic part 233.

The elastic part 233 may connect between the fixing part 231 coupled to the lower position of the pillar part 210 and the mounting part 237 inserted into the mounting hole 150' and may elastically connect the fixing part 231 and the mounting part 237. The elastic part 233 elastically connects the fixing part 231 and the mounting part 237 and may be formed having a relatively thin thickness to flexible for elastic deformation. In embodiments of the present disclosure, the locking jaw member 230 may be integrally formed of the same material capable of elastic deformation as a whole, and for example, elastic deformation may be allowed to the entire locking jaw member 230 including the elastic part 233, having a relatively thin thickness, and through the pillar part 210 and the elastic part 233 that excludes direct position fixation to the mounting hole 150', a relatively large amount of elastic deformation of the locking jaw member 230 may occur. In embodiments of the present disclosure, the elastic part 233 may extend along an oblique direction to follow both the axial direction X of the pillar part 210 and the crossing direction Y corresponding to the elastic bias direction.

The hooking part 235 may be formed between the elastic part 233 and the mounting part 237 inserted into the mounting hole 150'. The hooking part 235 may support the corner (or edge) C around the mounting hole 150' at the stepped surface 235a of the hooking part 235 corresponding to the thickness step between the elastic part 233 and the mounting part 237. In embodiments of the present disclosure, the stepped surface 235a of the hooking part 235 may support the corner C around the mounting hole 150', and together with the stepped surface 235a of the hooking part 235, through the mounting part 237 in close contact with the side of the mounting hole 150', the location of the locking jaw member 230 may be firmly fixed while surrounding (e.g., continuously surrounding) the side and corner C of the mounting hole 150'.

The stepped surface 235a of the hooking part 235 may be formed by a thickness step between the hooking part 235 and the mounting part 237, and a thickness difference may be formed between the hooking part 235 and the mounting part 237 to form the stepped surface 235a of the hooking part 235. For example, the mounting part 237 extends from an inner position adjacent to the pillar part 210 along the crossing direction Y of the hooking part 235, and a thickness step between the mounting part 237 and the hooking part 235 may be formed to surround the corner C of the mounting hole 150'. For example, the corner C of the mounting hole 150' may be surrounded by the stepped surface 235a corresponding to the thickness step between the mounting part 237 and the hooking part 235. In embodiments of the present disclosure, the stepped surface 235a, which supports the corner C of the mounting hole 150', may be formed at a position where the hooking part 235 and the mounting part 237 come into contact with each other at one end of the hooking part 235, and the stepped surface 235a formed on one end of the hooking part 235 and the mounting part 237 connected to one end of the hooking part 235 may be connected to each other to surround the corner C of the mounting hole 150'. In embodiments of the present disclosure, the hooking part 235 may extend from the elastic part 233 and may be formed to have a relatively thicker thickness than the elastic part 233. In embodiments of the present disclosure, the hooking part 235 and the mounting part 237 may be connected to each other through a stepped surface 235a corresponding to a thickness step between the hooking part 235 and the mounting part 237, and the hooking part 235 and the elastic part 233 may be connected to each other through a round joint J that smoothly connects the different thickness portions between the hooking part 235 and the elastic part 233. The hooking part 235 and the mounting part 237 may be connected to each other through an angled stepped surface 235a to receive an edge forming a corner C of the mounting hole 150', and the hooking part 235 and the elastic part 233 may be connected to each other through a round joint J to flexibly accommodate deformation therebetween and avoid a stress concentration. The hooking part 235 and the elastic part 233 may extend along the axial direction X of the pillar part 210, may extend along the crossing direction Y corresponding to the circumferential direction of the pillar part 210, and may extend along an oblique direction that follows both the axial direction X and the crossing direction Y. However, in embodiments of the present disclosure, that the elastic part 233 and/or the hooking part 235 may extend along the oblique direction may refer to the elastic part 233 and/or the hooking part 235 extending in a generally straight form (or shape) while being elastically deformed while following both the axial direction X and the crossing direction Y rather than being limited to meaning that the elastic part 233 and/or the hooking part 235 extends in a straight oblique shape that follows both the axial direction X and the crossing direction Y. For example, when the round joint J connecting the elastic part 233 to the hooking part 235 is formed at an inner position relatively adjacent to the pillar part 210, the contours of oblique lines formed at outer positions of the elastic part 233 and the hooking part 235 may extend along substantially the same inclination.

The mounting part 237 may extend from an inner position relatively adjacent to the pillar part 210 on the stepped surface 235a forming one end of the hooking part 235, and to be in close contact with the side of the mounting hole 150', compared to the extension direction of the elastic part 233 described above, the mounting part 237 may extend generally along an inclined direction near to the axial direction X of the pillar part 210. For example, the mounting part 237 may extend more steeply along the axial direction X of the pillar part 210 compared to the extending direction of the elastic part 233.

In embodiments of the present disclosure, the mounting part 237 may fix the position of the temperature measuring sensor 200 with respect to the housing 150 by being in close contact with the mounting hole 150' formed in one side of the housing 150 and may provide physical binding (e.g., may fix) between the sealing member 300 disposed outside the housing 150 and the temperature measuring sensor 200. In embodiments of the present disclosure, the mounting part 237 is in close contact with the side (e.g., an inner circumferential surface) of the sealing member 300 disposed outside the housing 150 at the same time it is in close contact with the side of the mounting hole 150' formed on one side of the housing 150. The mounting part 237 has a lower part in close contact with the side of the mounting hole 150' and an upper part in close contact with the side (e.g., inner circumferential surface) of the sealing member 300. For example, the mounting part 237 may extend along the axial direction X of the pillar part 210. The lower part of the mounting part 237 adjacent to the hooking part 235 along the axial direction X may be in close contact with the side of the mounting hole 150', and an upper portion of the mounting part 237 adjacent to the expansion part 250 along the axial direction X may come into close contact with the side (e.g., the inner circumferential surface) of the sealing member 300. In this way, the mounting part 237 may provide binding (e.g., may fix) between the temperature measuring sensor 200 and other adjacent components, or between the housing 150 and the sealing member 300, through its lower and upper portions.

In embodiments of the present disclosure, the pillar part 210 may be formed to pass through the inside and outside of the housing 150 along the axial direction X and may be formed to pass through the inside and outside of the housing 150 through the mounting hole 150' in the housing 150. For example, the pillar part 210 may have a square pillar shape having a square cross section to pass through the circular mounting hole 150'. However, in other embodiments of present disclosure, to the extent that the pillar part 210 extends long along the axial direction X to penetrate (or extend between) the inside and outside of the housing 150, the pillar part 210 may be formed into a column shape having various shapes, such as a circular cross section or a square cross section. For example, in embodiments of the present disclosure, the pillar part 210 may have a rectangular cross section in which a relatively short side and a relatively long side face each other, and the locking jaw member 230 may be formed at positions of opposite rotational angles along the circumference of the centrifugal axis of the shaft, for example, may be formed at a pair of short sides facing each other. For example, the overall shape of the temperature measuring sensor 200 may have a long side of the rectangular cross section of the pillar part 210, a flat pillar part 210 extending from the short side along the long side direction, and an expansion part 250 formed in a disk shape from the assemblies 210 and 230 of the locking jaw member 230 and the assemblies 210 and 230 along the axial direction X.

In embodiments of the present disclosure, the locking jaw member 230, which is part of the pillar part 210 that extends through the inside and outside of the housing 150, may include a fixing part 231, an elastic part 233, and a hooking part 235 inside the housing 150, and the pillar part 210 may include an expansion part 250 outside the housing 150. The expansion part 250 may have an extended form along the circumference of the pillar part 210 outside the housing 150 and, for example, may have a disk shape extending along the circumference of the centrifugal axis of the shaft and may extend from (e.g., may radially extend from) the pillar part 210 along the crossing direction Y crossing the axial direction X. In embodiments of the present disclosure, the expansion part 250 may be extended in a substantially disc shape over a range of rotational angles from the center of the shaft of the pillar part 210 along the circumference of the shaft. In embodiments of the present disclosure, the pillar part 210 may have a columnar shape of an approximately square pillar, and the expansion part 250 may be formed in the form of a disk extending from the pillar part 210 over the entire range of rotation angles along the circumferential direction of the shaft. In embodiments of the present disclosure, the locking jaw member 230 may not extend over the range of the entire rotation angle along the circumference of the shaft from the centrifugal center of the shaft of the pillar part 210 and may extend along the crossing direction Y from opposite rotational angular positions along the circumference of the centroid of the axis, and the expansion part 250 may be formed in a disk shape while extending over the entire range of rotation angles along the centrifugal circumference of the shaft of the pillar part 210.

The expansion part 250 may extend along the circumference of the shaft from the centrifugal center of the shaft along the circumference of the pillar part 210 in a disk shape, may cover the upper part of the circular mounting hole 150' and may provide a mounting location for the sealing member 300. As will be described later, the sealing member 300 may be disposed outside the housing 150 in which the mounting hole 150' is formed. For example, the sealing member 300 may be disposed between the outer surface of the housing 150 and the expansion part 250 outside the housing 150.

The temperature measuring sensor 200 may extend from the outside of the housing 150 toward the inside of the housing 150 along the axial direction X and may enter the accommodation space forming the inside of the housing 150 and detect the temperature of the battery cell 10 in the accommodation space. In embodiments of the present disclosure, the pillar part 210 forming the skeleton (or structure) of the temperature measuring sensor 200 may extend from the outside of the housing 150 toward the battery cell 10 accommodated inside the housing 150 along the axial direction X and may contact the outer surface of the battery cell 10. For example, in embodiments of the present disclosure, the lower end (or the distal end) of the pillar part 210 and the battery cell 10 may be in contact with each other via a thermal interference material (TIM) 400. The TIM 400 may press and contact the outer surface of the battery cell 10 while being adhered to the lower end of the pillar part 210. For example, the TIM 400 may be separated from the battery cell 10 by eliminating (or removing) forced contact from the battery cell 10 together with the temperature measuring sensor 200, which is detachable from the housing 150, for maintenance purposes, and contact between the TIM 400 and the battery cell 10 may be made in a non-adhesive manner (e.g., through non-adhesive surfaces) that do not depend on adhesive force.

The lower end of the pillar part 210 may have a shape that matches or substantially matches with the outer surface of the battery cell 10 to be contacted. In embodiments of the present disclosure, the battery cell 10 may have first and second ends (e.g., first and second end surfaces)11 and 12 on which first and second electrodes are formed, respectively, and a cylindrical side 15 connecting the first and second ends 11 and 12 and may be provided as a circular battery cell formed in a cylindrical shape overall. The lower end of the pillar part 210 may come into contact with the side 15 of the cylindrical shape of the battery cell 10 and may be formed in a concave curved surface shape matching the shape of the side 15 of the battery cell 10. For example, the lower end of the pillar part 210 may have a curvature or a radius of curvature R corresponding to the side 15 of the battery cell 10.

In another embodiment of present disclosure, the battery cell 10 may have a substantially hexagonal shape having a terminal surface on which the first and second electrodes are formed together, a bottom surface opposite to the terminal surface, and a side that connects between the terminal surface and the bottom surface. In such an embodiment, the lower end of the pillar part 210 may be in contact with any one of the terminal surface, the bottom surface, and the side of the battery cell 10 and may be formed in a flat shape to match the same.

The pillar part 210 may have (or may form) an inner space extending along the axial direction X thereof, and a temperature sensor may be accommodated in the inner space. In embodiments of the present disclosure, the temperature sensing unit may be a variable resistor whose electrical resistance changes according to a change in the sensed temperature and may include, for example, lead wires having different polarities connected to the variable resistor. For example, the temperature sensor may detect the temperature of a certain battery cell 10 or the temperature of a certain location inside the accommodation space according to the orientation direction of the pillar part 210 extending along the axial direction X. A filler for mediating heat transfer between the temperature sensor and the pillar part 210 and fixing the position of the temperature sensor may be filled in the inner space of the pillar part 210 in which the temperature sensor is accommodated. For example, the filler may mediate heat transfer between the pillar part 210 in contact with the outer surface of the battery cell 10 and a temperature sensor accommodated in the inner space of the pillar part 210.

The sealing member 300 is configured to surround the mounting hole 150' in the housing 150 to block the inflow of foreign substances through the mounting hole 150' and may be configured to seal the accommodation space inside the housing 150 by blocking the inflow of external moisture or uncontrolled external air. In embodiments of the present disclosure, the sealing member 300 may be formed to surround the mounting hole 150' in the housing 150, and for example, a double seal may be provided to double surround the mounting hole 150'. In embodiments of the present disclosure, the sealing member 300 may have an inner wall 301 and an outer wall 302 surrounding the mounting hole 150' at different radial positions from the centrifugal center of the mounting hole 150' to double surround (e.g., to provide two sealing surfaces around) the circumference of the mounting hole 150' at different positions. The periphery of the mounting hole 150' may be surrounded by the double sealing provided by the inner wall 301 and the outer wall 302. Throughout this specification, that the sealing member 300 includes an inner wall 301 and an outer wall 302 doubly surrounding the mounting hole 150' may refer to that the sealing member 300 is formed having a spaced apart structure from each other between the upper ends of the inner wall 301 and the outer wall 302 and between the lower ends between the inner wall 301 and the outer wall 302 through a separation groove 300' formed between the inner wall 301 and the outer wall 302.

The inner wall 301 of the sealing member 300 may forcibly contact the locking jaw member 230 (e.g., the mounting part 237) to fix the position of the sealing member 300, and through the locking jaw member 230 (e.g., the mounting part 237) pressurized on the inner wall 301 of the sealing member 300, the inner wall 301 of the sealing member 300 may fix the position of the sealing member 300 and strengthen the sealing around the mounting hole 150'. For example, the sealing member 300 may be fixed in position by being in close contact between the outer surface of the housing 150 and the expansion part 250 of the temperature measuring sensor 200 fixed in a position around the mounting hole 150'. Additional position fixing force may be provided through the mounting part 237 pressurized on the inner wall 301 of the sealing member 300. The sealing of the mounting hole 150' may be performed not only through double sealing of the inner wall 301 and the outer wall 302 surrounding the circumference of the mounting hole 150' but also through the locking jaw member 230 (e.g., the mounting part 237) being in close contact with the inner wall 301 such that penetration of external foreign substances, including moisture or external air of uncontrolled temperature, may be additionally blocked.

The sealing member 300 may have a separation groove 300' extending annularly along a space between the inner wall 301 and the outer wall 302 formed in an annular concentric circle shape. In embodiments of the present disclosure, the mounting hole 150' may be formed along a first radius from the centrifugal center of the mounting hole 150', and the inner wall 301 and the outer wall 302 of the sealing member 300 may be formed having an increased radius compared to the first radius to surround the circumference of the mounting hole 150'. For example, the inner wall 301 of the sealing member 300 may be formed along a circular trajectory (or circular path) of a second radius from the centrifugal center of the mounting hole 150', and the outer wall 302 of the sealing member 300 may be formed along a circular trajectory of a third radius from the centrifugal center of the mounting hole 150'. The third radius of the outer wall 302 of the sealing member 300 may be larger than the second radius of the inner wall 301 of the sealing member 300, and the second radius of the inner wall 301 of the sealing member 300 may be larger than the first radius of the mounting hole 150'. The sealing member 300 may be disposed between the expansion part 250 and the housing 150 in an elastically compressed state, and the sealing member 300 may come into close contact between the expansion part 250 and the housing 150 according to an elastic bias that tends to expand between the expansion part 250 and the housing 150. For example, in embodiments of the present disclosure, the sealing member 300 may be formed of a material capable of elastic deformation, and through elastic deformation, external foreign substances may be blocked while being closely attached between the outer surface of the housing 150 and the expansion part 250 disposed vertically along the axial direction X, and the inside and outside of the housing 150 in which the mounting hole 150' is formed may be sealed from each other.

In embodiments of the present disclosure, the temperature measuring sensor 200 may be detachably assembled to the battery pack, and convenience may be enhanced in terms of maintenance, such as replacement of the temperature measuring sensor 200, through detachable assembly of the temperature measuring sensor 200. In embodiments of the present disclosure, the temperature measuring sensor 200 may be fixed in position with respect to the mounting hole 150' by the mounting part 237 being elastically biased against the mounting hole 150', and in this case, surfaces facing each other between the mounting hole 150' and the mounting part 237 forming elastic contact with pressure may be non-adhesive surfaces without an adhesive. In embodiments of the present disclosure, the mounting part 237, which is fixed in position with respect to the mounting hole 150', may be fixed in position with respect to each other through physical engagement with the mounting hole 150' and may not be fixed in position with respect to each other through adhesive surfaces with adhesive-like adhesiveness.

Similarly, the sealing member 300 (e.g., an inner side thereof), which forcibly contacts the mounting part 23, which is elastically biased, may also form close contact between the mounting part 237 and the sealing member 300, through physical bonding by forcible contact between the mounting part 237 and the sealing member 300 through elastic bias without forming (or including) an adhesive surface with the mounting part 237. Thus, while the temperature measuring sensor 200 forms close contact with other components adjacent to the temperature measuring sensor 200, for example, the housing 150 and the sealing member 300, through the non-adhesive surface where an adhesive is not disposed with the housing 150 and the sealing member 300, the sealing property may be enhanced by providing positional fixation with respect to each other or through intimate contact with each other.

In embodiments of the present disclosure, through physical bonding that does not depend on (or utilize) adhesive force by an adhesive between other neighboring components, for example, through physical bonding provided from the elastic bias of the mounting part 237 of the temperature measuring sensor 200, the temperature measuring sensor 200 may easily provide physical constraints from other neighboring components, and for example, through elastic deformation of the locking jaw member 230 providing an elastic bias, a physical restraint relationship between the locking jaw member 230 and other neighboring elements may be easily provided.

In embodiments of the present disclosure, in relation to the detachment and installation of the locking jaw member 230, while the pair of locking jaw members 230 formed on opposite sides of the pillar part 210 are pressed along the direction toward each other (e.g., the crossing direction Y), the temperature measuring sensor 200 is released from the locked state with the housing 150 and may be detached from the housing 150. When the pressure on the pair of locking jaw members 230 of the temperature measuring sensor 200 inserted into the mounting hole 150' is relieved such that a pair of locking jaw members 230 are released in a direction away from each other centering on the pillar part 210, according to the elastic bias of the locking jaw member 230, the temperature measuring sensor 200 may be mounted by the locking jaw member 230 engaging with the housing 150.

In embodiments of the present disclosure, through the mounting part 237 of the temperature measuring sensor 200, by forming close contact with the temperature measuring sensor 200 and other neighboring components, for example, with the housing 150 and the sealing member 300, positional alignment of the housing 150 and the sealing member 300 with respect to each other is not required, and automatic alignment may be achieved through the mounting of the temperature measuring sensor 200. For example, according to embodiments of the present disclosure, because the sealing member 300 surrounds the circumference of the mounting hole 150' formed in the housing 150 and blocks communication between the inside and outside of the housing 150 through the mounting hole 150', the sealing member 300 should be aligned with respect to each other in relation to the mounting hole 150', and if the centrifugal center of the mounting hole 150' and the centrifugal center of the sealing member 300 are offset from each other, for example, if the inner wall 301 or the outer wall 302 of the sealing member 300 through the mounting hole 150' is exposed, double sealing of the mounting hole 150' through the inner wall 301 and the outer wall 302 of the sealing member 300 may not be provided. In embodiments of the present disclosure, to automatically align the housing 150 and the sealing member 300 with respect to each other through the same configuration of the temperature measuring sensor 200, for example, the same mounting part 237 providing an elastic bias, even without requiring a separate operation for alignment, the housing 150 (e.g., the mounting hole 150') and the sealing member 300 may be automatically aligned with each other by the mounting part 237.

As mentioned above, in embodiments of the present disclosure, while the temperature measuring sensor 200 forms close contact with other neighboring components through the same component (e.g., the mounting part 237), automatic alignment with the housing 150 and the sealing member 300 may occur. In embodiments of the present disclosure, the sealing member 300 may be in a separate structure from the temperature measuring sensor 200, and through the sealing member 300 and the temperature measuring sensor 200 formed in a separate structure pass through the mounting part 237, for example, the mounting part 237, which is elastically biased, may provide self-alignment with respect to each other components around the mounting hole 150'. Different from embodiments of the present disclosure, if the temperature measuring sensor 200 and the sealing member 300 are implemented as one composite part, within the process of forming one composite part, positional alignment with respect to each other needs to be made between the temperature measuring sensor 200 and the sealing member 300, and a separate process for positional alignment may be required, and depending on the accuracy of the position between the temperature measuring sensor 200 and the sealing member 300, positional alignment with respect to each other may be misaligned. Further, due to physical interference between the temperature measuring sensor 200 and the sealing member 300, positional alignment with respect to the mounting hole 150' may be difficult in relation to the housing 150 in which the mounting hole 150' is formed. In embodiments of the present disclosure, the temperature measuring sensor 200, the housing 150, and the sealing member 300 are formed of separate parts and may be assembled to each other and automatically aligned with each other by the mounting part 237 of the temperature measuring sensor 200, making assembly work easy, and through assembly of the individual parts, the unit cost of the individual parts may be lowered and the overall cost of the battery pack may be lowered.

The separation groove 300' formed in the sealing member 300 may spatially separate the inner wall 301 and the outer wall 302 from each by, for example, separating the inner wall 301 and the outer wall 302 doubly surrounding the mounting hole 150' from each other along the circumferential direction from the centrifugal center of the mounting hole 150'. In this manner, elastic deformation of the inner wall 301 and the outer wall 302 may be promoted, and for example, the inner wall 301 and the outer wall 302 may be flexibly and elastically deformed according to the pressure between the expansion part 250 and the outer surface of the housing 150, and the outer surface of the expansion part 250 and the housing 150 may be shielded. The separation groove 300' between the inner wall 301 and the outer wall 302 may provide a space to accommodate foreign matter penetrating from the outside and may prevent further penetration of foreign substances toward the mounting hole 150'. The inner wall 301 and the outer wall 302 may form a gap between the outer surface of the expansion part 250 and the housing 150 that come into contact with the upper and lower parts, and even if a foreign substance penetrates through the gap between them according to, for example, the capillary phenomenon, external foreign matter may be accommodated in the separation groove 300' formed between the inner wall 301 and the outer wall 302 and further penetration of foreign matter may be prevented.

In embodiments of the present disclosure, separation grooves 300' may be formed in the upper surface of the sealing member 300 facing the expansion part 250 and the lower surface of the sealing member 300 facing the outer surface of the housing 150, respectively. The separation grooves 300' may be formed on the upper and lower surfaces of the sealing member 300, respectively, and a cross section of the sealing member 300 in which the separation groove 300' is formed may be formed in an approximate H shape. Through the separation groove 300', the infiltration path of foreign substances penetrating from the outside may be blocked.

The upper and lower surfaces of the sealing member 300 may be covered by the outer surface of the expansion part 250 and the housing 150 facing each other, and the outer surface of the expansion part 250 and the housing 150 may be formed having a sufficient area to cover the upper and lower surfaces of the sealing member 300. For example, the expansion part 250 may be formed having a sufficient area to cover the outer wall 302 of the sealing member 300 from the center of the mounting hole 150', and the outer diameter of the expansion part 250 may be larger than the outer diameter of the outer wall 302 of the sealing member 300. For example, the outer diameter of the expansion part 250 may protrude from (or may protrude beyond) the outer diameter of the outer wall 302 of the sealing member 300.

According to embodiments of the present disclosure, by providing a sealing member surrounding the mounting hole along the periphery of the mounting hole in the housing to which the temperature sensor for detecting the temperature of the battery cell is mounted, a battery pack may be provided in which an inflow of external foreign substances through the mounting hole is blocked.

According to embodiments of the present disclosure, by facilitating positional alignment between a temperature sensor for detecting the temperature of the battery cells entering the accommodation space inside the housing from the outside of the housing, and a housing and a sealing member adjacent to the temperature sensor, as the sealing member is aligned along the periphery of the mounting hole of the housing for at least a part of the temperature measuring sensor to enter the inside of the housing, a battery pack with improved sealing characteristics may be provided.

It should be understood that embodiments described herein should be considered in a descriptive sense and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims.

## Claims

1. A battery pack comprising:
a plurality of battery cells (10);
a housing (150) accommodating the plurality of battery cells (10);
a temperature measuring sensor (200) extending from outside the housing (150) to inside the housing (150) along an axial direction by passing through a mounting hole (150') in the housing (150), the temperature measuring sensor (200) comprising:
a pillar part (210) extending along the axial direction; and
an an expansion part (250) expanding from a circumference of the pillar part (210) to cover the mounting hole (150') at an upper portion of the mounting hole (150') along the axial direction;
**characterized in that** the temperature measuring sensor (200) further comprises:
a locking jaw member (230) extending from a lower position of the pillar part (210) to an upper position toward the housing (150) along the axial direction, extending to follow both the axial direction and a crossing direction crossing the axial direction, and providing an elastic bias force along the crossing direction away from the pillar part (210) with respect to the mounting hole (150') in the housing (150);
wherein the temperature measuring sensor (200) further comprises:
a sealing member (300) between the expansion part (250) of the temperature measuring sensor (200) and the housing (150) and surrounding the mounting hole (150');
wherein the locking jaw member (230) comprises:
a mounting part (237) in close contact with a periphery of the mounting hole (150') and an inner wall of the sealing member (300) while providing an outwardly elastic bias force with respect to the periphery of the mounting hole (150') and the inner wall of the sealing member (300); and
the mounting part (237) comprising:
a lower portion fitted into the mounting hole and forcibly contacting the mounting hole (150'), and
an upper portion forcibly contacting the inner wall of the sealing member (300),
the mounting part (237) aligns the temperature measuring sensor (200) and the sealing member (300) with respect to the mounting hole (150') in the housing (150); and the temperature measuring sensor (200) and the sealing member (300) are aligned with respect to the mounting hole (150') due to the elastic bias force of the mounting part (237).

2. The battery pack as claimed in claim 1, wherein the locking jaw member (230) comprises:
a fixing part (231) fixed to the lower position of the pillar part (210);
an elastic part (233) extending upwardly from the fixing part (231) to follow both the axial direction and the crossing direction;
a hooking part (235) having a stepped surface (235a) extending upwardly from the elastic part (233) and supporting a corner of the housing (150) around the mounting hole (150'); and
a mounting part (237) extending upwardly from the hooking part (235) and inserted into and fixed to a periphery of the mounting hole (150').

3. The battery pack as claimed in claim 2, wherein the stepped surface (235a) is formed by a thickness difference between the hooking part (235) and the mounting part (237) at one end of the hooking part (235).

4. The battery pack as claimed in any of claims 2 to 3, wherein the stepped surface (235a) and the mounting part (237), which extends from an inner position adjacent to the pillar part (210) on the stepped surface, together surround the corner of the housing (150) around the mounting hole (150').

5. The battery pack as claimed in any of claims 2 to 4, wherein the elastic part (233) has a thickness less than a thickness of each of the fixing part (231) and the hooking part (235).

6. The battery pack as claimed in any of claims 2 to 5, wherein the fixing part (231) and hooking part (235) connected to both ends of the elastic part (233) have a rounded joint forming a connection with the elastic part (233).

7. The battery pack as claimed in any of claims 2 to 6, wherein the elastic part (233) and the hooking part (235) each has an oblique contour that follows both the axial direction and the crossing direction; preferably the elastic part (233) and the hooking part (235) each has an oblique contour extending with substantially same slope.

8. The battery pack as claimed in any of claims 2 to 7, wherein the mounting part (237) provides an elastic bias force tending to expand the mounting part (237) toward the periphery of the mounting hole (150'), and
wherein the mounting part (237) extends along a direction relatively closer to the axial direction than an extension direction of the elastic part (233) and the hooking part (235).

9. The battery pack as claimed in any of claims 1 to 8, wherein the expansion part (250) has a disk shape extending from the circumference of the pillar part (210).

10. The battery pack as claimed in any of claims 1 to 9, wherein the sealing member (300) is arranged between an outer surface of the housing (150) and the expansion part (250) on the outer surface of the housing (150) opposite to the plurality of battery cells (10).

11. The battery pack as claimed in any of claims 1 to 10, wherein the sealing member (300) comprises a concentric inner wall and an outer wall surrounding the mounting hole (150') at different inner and outer positions to provide double sealing of the mounting hole (150').

12. The battery pack as claimed in claim 11, wherein the sealing member (300) has an annular separation groove separating the inner wall and the outer wall from each other in at least one of an upper surface of the sealing member (300) facing the expansion part (250) and a lower surface of the sealing member (300) facing the housing (150).

13. The battery pack as claimed in any of claims 1 to 12, wherein the locking jaw member (230) comprises a pair of locking jaw members on opposite sides of the pillar part (210),
wherein the pair of locking jaw members provide an outwardly elastic bias force toward a periphery of the mounting hole (150'), and
wherein the temperature measuring sensor (200) is configured to be attached to or detached from the mounting hole (150') by providing a pressing force to the pair of locking jaw members toward the pillar part (210) or releasing the pressing force; optionally a contact surface between the locking jaw member (237) and the mounting hole (150') and the sealing member (300) is a non-adhesive surface.

14. The battery pack as claimed in any of claims 1 to 13, wherein the pillar part (210) comprises a lower end extending toward one of the battery cells (10),
wherein the lower end of the pillar part (210) and the one of the battery cells (10) contact each other through a thermal interference material, and
wherein the thermal interference material provides forced contact with the one of the battery cells (10) while being adhered to the lower end of the pillar part (210); optionally the one of the battery cells (10) has first and second end surfaces on which first and second electrodes are respectively formed and a cylindrical side extending between the first and second end surfaces, and
wherein the lower end of the pillar part (210) has a concave curved surface matching the cylindrical side of the one of the battery cells (10).

## Patentansprüche

1. Batteriepack, umfassend:
mehrere Batteriezellen (10);
ein Gehäuse (150), das die mehreren Batteriezellen (10) aufnimmt;
einen Temperaturmesssensor (200), der sich von außerhalb des Gehäuses (150) entlang einer axialen Richtung in das Innere des Gehäuses (150) erstreckt, indem er durch ein Montageloch (150') im Gehäuse (150) verläuft, wobei der Temperaturmesssensor (200) Folgendes umfasst:
ein Säulenteil (210), das sich entlang der axialen Richtung erstreckt; und
ein Ausdehnungsteil (250), das sich von einem Umfang des Säulenteils (210) aus ausdehnt, um das Montageloch (150') an einem oberen Abschnitt des Montagelochs (150') entlang der axialen Richtung abzudecken;
**dadurch gekennzeichnet, dass** der Temperaturmesssensor (200) ferner Folgendes umfasst:
ein Verriegelungsbackenelement (230), das sich von einer unteren Position des Säulenteils (210) zu einer oberen Position in Richtung des Gehäuses (150) entlang der axialen Richtung erstreckt, sich so erstreckt, dass es sowohl der axialen Richtung als auch einer die axiale Richtung kreuzenden Kreuzungsrichtung folgt, und eine elastische Vorspannkraft entlang der Kreuzungsrichtung vom Säulenteil (210) weg in Bezug auf das Montageloch (150') im Gehäuse (150) bereitstellt;
wobei der Temperaturmesssensor (200) ferner Folgendes umfasst:
ein Dichtungselement (300) zwischen dem Ausdehnungsteil (250) des Temperaturmesssensors (200) und dem Gehäuse (150), das das Montageloch (150') umgibt;
wobei das Verriegelungsbackenelement (230) Folgendes umfasst:
ein Montageteil (237), das in engem Kontakt mit einem Umfang des Montagelochs (150') und einer Innenwand des Dichtungselements (300) steht und dabei eine nach außen gerichtete elastische Vorspannkraft in Bezug auf den Umfang des Montagelochs (150') und die Innenwand des Dichtungselements (300) bereitstellt; und wobei das Montageteil (237) Folgendes umfasst:
einen unteren Abschnitt, der in das Montageloch eingepasst ist und das Montageloch (150') zwangsweise berührt, und
einen oberen Abschnitt, der die Innenwand des Dichtungselements (300) zwangsweise berührt,
das Montageteil (237) den Temperaturmesssensor (200) und das Dichtungselement (300) in Bezug auf das Montageloch (150') im Gehäuse (150) ausrichtet; und der Temperaturmesssensor (200) und das Dichtungselement (300) aufgrund der elastischen Vorspannkraft des Montageteils (237) in Bezug auf das Montageloch (150') ausgerichtet sind.

2. Batteriepack nach Anspruch 1, wobei das Verriegelungsbackenelement (230) Folgendes umfasst:
ein Befestigungsteil (231), das an der unteren Position des Säulenteils (210) befestigt ist;
ein elastisches Teil (233), das sich vom Befestigungsteil (231) nach oben erstreckt, um sowohl der axialen Richtung als auch der Kreuzungsrichtung zu folgen;
ein Einhakteil (235) mit einer abgestuften Oberfläche (235a), die sich vom elastischen Teil (233) nach oben erstreckt und eine Ecke des Gehäuses (150) um das Montageloch (150') herum abstützt; und
ein Montageteil (237), das sich vom Einhakteil (235) nach oben erstreckt und in einen Umfang des Montagelochs (150') eingeführt und daran befestigt ist.

3. Batteriepack nach Anspruch 2, wobei die abgestufte Oberfläche (235a) durch einen Dickendifferenz zwischen dem Einhakteil (235) und dem Montageteil (237) an einem Ende des Einhakteils (235) gebildet ist.

4. Batteriepack nach einem der Ansprüche 2 bis 3, wobei die abgestufte Oberfläche (235a) und das Montageteil (237), das sich von einer inneren Position neben dem Säulenteil (210) auf der abgestuften Oberfläche erstreckt, gemeinsam die Ecke des Gehäuses (150) um das Montageloch (150') herum umschließen.

5. Batteriepack nach einem der Ansprüche 2 bis 4, wobei das elastische Teil (233) eine Dicke aufweist, die geringer ist als die Dicke sowohl des Befestigungsteils (231) als auch des Einhakteils (235).

6. Batteriepack nach einem der Ansprüche 2 bis 5, wobei das Befestigungsteil (231) und das Einhakteil (235), die mit beiden Enden des elastischen Teils (233) verbunden sind, eine abgerundete Verbindungsstelle aufweisen, die eine Verbindung mit dem elastischen Teil (233) bildet.

7. Batteriepack nach einem der Ansprüche 2 bis 6, wobei das elastische Teil (233) und das Einhakteil (235) jeweils eine schräge Kontur aufweisen, die sowohl der axialen Richtung als auch der Kreuzungsrichtung folgt; vorzugsweise das elastische Teil (233) und das Einhakteil (235) jeweils eine schräge Kontur aufweisen, die sich mit einer im Wesentlichen gleichen Neigung erstreckt.

8. Batteriepack nach einem der Ansprüche 2 bis 7, wobei das Montageteil (237) eine elastische Vorspannkraft bereitstellt, die dazu neigt, das Montageteil (237) in Richtung des Umfangs des Montagelochs (150') auszudehnen, und
wobei sich das Montageteil (237) entlang einer Richtung erstreckt, die relativ näher an der axialen Richtung liegt als eine Erstreckungsrichtung des elastischen Teils (233) und des Einhakteils (235).

9. Batteriepack nach einem der Ansprüche 1 bis 8, wobei das Ausdehnungsteil (250) eine Scheibenform aufweist, die sich vom Umfang des Säulenteils (210) aus erstreckt.

10. Batteriepack nach einem der Ansprüche 1 bis 9, wobei das Dichtungselement (300) zwischen einer Außenfläche des Gehäuses (150) und dem Ausdehnungsteil (250) auf der den mehreren Batteriezellen (10) gegenüberliegenden Außenfläche des Gehäuses (150) angeordnet ist.

11. Batteriepack nach einem der Ansprüche 1 bis 10, wobei das Dichtungselement (300) eine konzentrische Innenwand und eine Außenwand umfasst, die das Montageloch (150') an unterschiedlichen inneren und äußeren Positionen umgeben, um eine doppelte Abdichtung des Montagelochs (150') bereitzustellen.

12. Batteriepack nach Anspruch 11, wobei das Dichtungselement (300) eine ringförmige Trennrille aufweist, die die Innenwand und die Außenwand voneinander trennt, und zwar in mindestens einer von einer dem Ausdehnungsteil (250) zugewandten oberen Oberfläche des Dichtungselements (300) und einer dem Gehäuse (150) zugewandten unteren Oberfläche des Dichtungselements (300).

13. Batteriepack nach einem der Ansprüche 1 bis 12, wobei das Verriegelungsbackenelement (230) ein Paar von Verriegelungsbackenelementen auf gegenüberliegenden Seiten des Säulenteils (210) umfasst,
wobei das Paar von Verriegelungsbackenelementen eine nach außen gerichtete elastische Vorspannkraft in Richtung eines Umfangs des Montagelochs (150') bereitstellt, und
wobei der Temperaturmesssensor (200) so konfiguriert ist, dass er an dem Montageloch (150') angebracht oder von diesem gelöst werden kann, indem eine Druckkraft auf das Paar von Verriegelungsbackenelementen in Richtung des Säulenteils (210) ausgeübt oder die Druckkraft aufgehoben wird; optional eine Kontaktfläche zwischen dem Verriegelungsbackenelement (237) und dem Montageloch (150') und dem Dichtungselement (300) eine nicht klebende Oberfläche ist.

14. Batteriepack nach einem der Ansprüche 1 bis 13, wobei das Säulenteil (210) ein unteres Ende umfasst, das sich in Richtung einer der Batteriezellen (10) erstreckt,
wobei das untere Ende des Säulenteils (210) und die eine der Batteriezellen (10) über ein thermisches Interferenzmaterial miteinander in Kontakt stehen, und
wobei das thermische Interferenzmaterial einen Zwangskontakt mit der einen der Batteriezellen (10) bereitstellt, während es am unteren Ende des Säulenteils (210) haftet; optional die eine der Batteriezellen (10) eine erste und eine zweite Endfläche, auf denen jeweils eine erste und eine zweite Elektrode ausgebildet sind, und eine zylindrische Seite aufweist, die sich zwischen der ersten und der zweiten Endfläche erstreckt, und
wobei das untere Ende des Säulenteils (210) eine konkav gekrümmte Oberfläche aufweist, die an die zylindrische Seite der einen der Batteriezellen (10) angepasst ist.

## Revendications

1. Bloc-batterie comportant:
une pluralité d'éléments (10) de batterie;
un boîtier (150) recevant la pluralité d'éléments (10) de batterie;
un capteur de mesure de température (200) s'étendant de l'extérieur du boîtier (150) à l'intérieur du boîtier (150) dans une direction axiale en passant par un trou de montage (150') dans le boîtier (150), le capteur de mesure de température (200) comportant:
une partie de pilier (210) s'étendant dans la direction axiale; et
une partie d'expansion (250) s'étendant à partir d'une circonférence de la partie de pilier (210) pour recouvrir le trou de montage (150') au niveau d'une portion supérieure du trou de montage (150') dans la direction axiale;
**caractérisé en ce que** le capteur de mesure de température (200) comporte en outre:
un organe de mâchoire de verrouillage (230) s'étendant d'une position inférieure de la partie de pilier (210) à une position supérieure vers le boîtier (150) dans la direction axiale, s'étendant pour suivre à la fois la direction axiale et une direction transversale croisant la direction axiale, et fournissant une force de sollicitation élastique dans la direction transversale à l'écart de la partie de pilier (210) par rapport au trou de montage (150') dans le boîtier (150);
dans lequel le capteur de mesure de température (200) comporte en outre:
un organe d'étanchéité (300) entre la partie d'expansion (250) du capteur de mesure de température (200) et le boîtier (150) et entourant le trou de montage (150');
dans lequel l'organe de mâchoire de verrouillage (230) comporte:
une partie de montage (237) en contact étroit avec une périphérie du trou de montage (150') et une paroi interne de l'organe d'étanchéité (300) tout en fournissant une force de sollicitation élastique vers l'extérieur par rapport à la périphérie du trou de montage (150') et à la paroi interne de l'organe d'étanchéité (300); et
la partie de montage (237) comportant:
une portion inférieure placée dans le trou de montage et en contact forcé avec le trou de montage (150'), et
une portion supérieure en contact forcé avec la paroi interne de l'organe d'étanchéité (300),
la partie de montage (237) aligne le capteur de mesure de température (200) et l'organe d'étanchéité (300) par rapport au trou de montage (150') dans le boîtier (150); et le capteur de mesure de température (200) et l'organe d'étanchéité (300) sont alignés par rapport au trou de montage (150') en raison de la force de sollicitation élastique de la partie de montage (237).

2. Bloc-batterie selon la revendication 1, dans lequel l'organe de mâchoire de verrouillage (230) comporte:
une partie de fixation (231) fixée à la position inférieure de la partie de pilier (210);
une partie élastique (233) s'étendant vers le haut à partir de la partie de fixation (231) pour suivre à la fois la direction axiale et la direction transversale;
une partie d'accrochage (235) présentant une surface étagée (235a) s'étendant vers le haut à partir de la partie élastique (233) et supportant un coin du boîtier (150) autour du trou de montage (150'); et
une partie de montage (237) s'étendant vers le haut à partir de la partie d'accrochage (235) et insérée dans et fixée à une périphérie du trou de montage (150').

3. Bloc-batterie selon la revendication 2, dans lequel la surface étagée (235a) est formée par une différence d'épaisseur entre la partie d'accrochage (235) et la partie de montage (237) à une extrémité de la partie d'accrochage (235).

4. Bloc-batterie selon l'une quelconque des revendications 2 à 3, dans lequel la surface étagée (235a) et la partie de montage (237), qui s'étend à partir d'une position intérieure adjacente à la partie de pilier (210) sur la surface étagée, entourent ensemble le coin du boîtier (150) autour du trou de montage (150').

5. Bloc-batterie selon l'une quelconque des revendications 2 à 4, dans lequel la partie élastique (233) présente une épaisseur inférieure à une épaisseur de chacune de la partie de fixation (231) et de la partie d'accrochage (235).

6. Bloc-batterie selon l'une quelconque des revendications 2 à 5, dans lequel la partie de fixation (231) et la partie d'accrochage (235) reliées aux deux extrémités de la partie élastique (233) présentent un joint arrondi formant une liaison avec la partie élastique (233).

7. Bloc-batterie selon l'une quelconque des revendications 2 à 6, dans lequel la partie élastique (233) et la partie d'accrochage (235) présentent chacune un contour oblique qui suit à la fois la direction axiale et la direction transversale; de préférence la partie élastique (233) et la partie d'accrochage (235) présentent chacune un contour oblique s'étendant avec sensiblement la même pente.

8. Bloc-batterie selon l'une quelconque des revendications 2 à 7, dans lequel la partie de montage (237) fournit une force de sollicitation élastique tendant à étendre la partie de montage (237) vers la périphérie du trou de montage (150'), et
dans lequel la partie de montage (237) s'étend le long d'une direction relativement plus proche de la direction axiale qu'une direction d'extension de la partie élastique (233) et de la partie d'accrochage (235).

9. Bloc-batterie selon l'une quelconque des revendications 1 à 8, dans lequel la partie d'expansion (250) présente une forme de disque s'étendant à partir de la circonférence de la partie de pilier (210).

10. Bloc-batterie selon l'une quelconque des revendications 1 à 9, dans lequel l'organe d'étanchéité (300) est agencé entre une surface externe du boîtier (150) et la partie d'expansion (250) sur la surface externe du boîtier (150) opposée à la pluralité d'éléments (10) de batterie.

11. Bloc-batterie selon l'une quelconque des revendications 1 à 10, dans lequel l'organe d'étanchéité (300) comporte une paroi interne concentrique et une paroi externe entourant le trou de montage (150') en des positions internes et externes différentes pour assurer une double étanchéité du trou de montage (150').

12. Bloc-batterie selon la revendication 11, dans lequel l'organe d'étanchéité (300) présente une rainure de séparation annulaire séparant la paroi interne et la paroi externe l'une de l'autre dans au moins l'une d'une surface supérieure de l'organe d'étanchéité (300) orientée vers la partie d'expansion (250) et d'une surface inférieure de l'organe d'étanchéité (300) orientée vers le boîtier (150).

13. Bloc-batterie selon l'une quelconque des revendications 1 à 12, dans lequel l'organe de mâchoire de verrouillage (230) comporte une paire d'organes de mâchoire de verrouillage sur des côtés opposés de la partie de pilier (210),
dans lequel la paire d'organes de mâchoire de verrouillage fournit une force de sollicitation élastique vers l'extérieur en direction d'une périphérie du trou de montage (150'), et
dans lequel le capteur de mesure de température (200) est configuré pour être fixé au ou détaché du trou de montage (150') en fournissant une force de compression à la paire d'organes de mâchoire de verrouillage vers la partie de pilier (210) ou en relâchant la force de compression; éventuellement, une surface de contact entre l'organe de mâchoire de verrouillage (237) et le trou de montage (150') et l'organe d'étanchéité (300) est une surface non adhésive.

14. Bloc-batterie selon l'une quelconque des revendications 1 à 13, dans lequel la partie pilier (210) comporte une extrémité inférieure s'étendant vers l'un des éléments (10) de batterie,
dans lequel l'extrémité inférieure de la partie de pilier (210) et l'un des éléments (10) de batterie sont en contact l'un avec l'autre par l'intermédiaire d'un matériau d'interférence thermique, et
dans lequel le matériau d'interférence thermique fournit un contact forcé avec l'un des éléments (10) de batterie tout en étant collé à l'extrémité inférieure de la partie de pilier (210); éventuellement l'un des éléments (10) de batterie présente des première et deuxième surfaces d'extrémité sur lesquelles des première et deuxième électrodes sont respectivement formées et un côté cylindrique s'étendant entre les première et deuxième surfaces d'extrémité, et
dans lequel l'extrémité inférieure de la partie de pilier (210) présente une surface incurvée concave épousant le côté cylindrique de l'un des éléments (10) de batterie.
